# EUROPEAN PATENT APPLICATION

(11) **EP 4 718 228 A1**
(43) Date of publication of application: **01.04.2026**
(21) Application number: 24848001.4
(22) Date of filing: 12.07.2024
(51) Int. Cl.: G06F 3/04845

(54) **DISPLAY METHOD, MEDIUM, AND ELECTRONIC DEVICE**

(30) Priority: 03.08.2023 CN 202310979960
(71) Applicant: Huawei Technologies Co., Ltd., Shenzhen, Guangdong 518129 (CN)
(72) Inventor: HU, Debiao, Shenzhen, Guangdong 518129 (CN); WU, Liang, Shenzhen, Guangdong 518129 (CN); LIU, Hongbo, Shenzhen, Guangdong 518129 (CN); FAN, Xinxin, Shenzhen, Guangdong 518129 (CN); ZHOU, Xingchen, Shenzhen, Guangdong 518129 (CN)
(74) Representative: Isarpatent
(86) International application number: PCT/CN2024/105259
(87) International publication number: WO 2025/026042

(57) **Abstract**

This application relates to the field of computer technologies, and specifically, to a display method, a medium, and an electronic device. In the display method, when there is a specific relative angle and a specific relative distance between a first electronic device and a second electronic device, after a screen of the first electronic device displays a captured picture in a case that a primitive is at a user-desired specific placement position on a screen of the second electronic device, the screen of the second electronic device displays the primitive received from the first electronic device, and displays the primitive based on a corresponding display angle and display size. It may be understood that, when the second electronic device performs display based on the corresponding display angle and display size, a placement status of the primitive displayed on the second electronic device is consistent with a rotation angle and a relative size of the primitive on the captured picture of the first electronic device relative to a screen region of the second electronic device. In this way, user interaction is improved.

## Description

This application claims priority to Chinese Patent Application No. 202310979960.6, filed with the China National Intellectual Property Administration on August 3, 2023 and entitled "DISPLAY METHOD, MEDIUM, AND ELECTRONIC DEVICE", which is incorporated herein by reference in its entirety.

### TECHNICAL FIELD

This application relates to the field of computer technologies, and specifically, to a display method, a medium, and an electronic device.

### BACKGROUND

Currently, data may be shared between various electronic devices. For example, data such as images and texts may be shared between various devices in a common manner such as via Bluetooth or a wireless network. When an image is shared between electronic devices, a user may share the complete image or only a primitive (for example, a specific element such as a person or an object in the image) in the image by using the electronic devices.

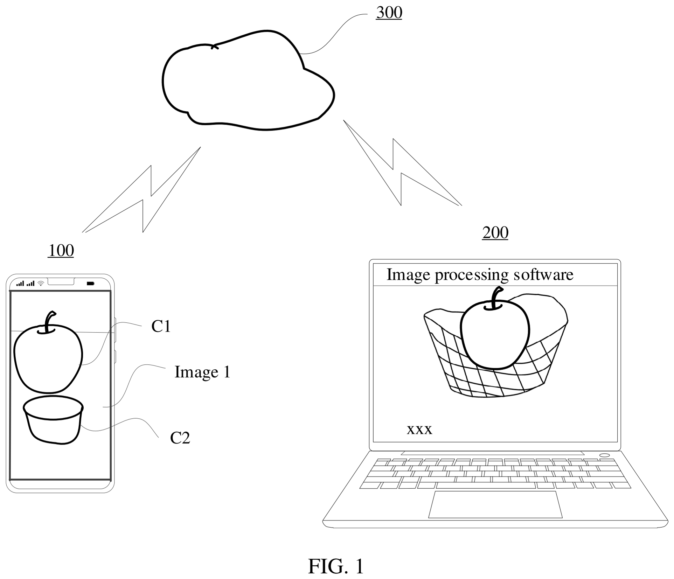

For example, FIG. 1 is a diagram in which a mobile phone 100 shares data with a computer 200 by using a cloud 300. The mobile phone 100 may perform data transmission with the computer 200 by using the computer cloud 300. As shown in FIG. 1, when the user uses image processing software (photoshop, PS) on the computer to make a poster, the user wants to obtain some image materials. In this case, it is inconvenient for the user to capture a material by using the computer 200, and the user needs to obtain the required image material by using the mobile phone 100 and transmit the required image material to the computer 200. Sometimes, there is a large amount of information of the image material, and the user wants to directly obtain some specific primitives in the image material without some cluttered background information. The mobile phone 100 may extract the primitives in the image material, and then transmit the primitives to the computer 200, so that the computer 200 processes the primitives.

Specifically, the user may obtain, by using the mobile phone 100, an image 1 shown in FIG. 1. In this case, the mobile phone 100 may send the image 1 to the cloud 300. By using an intelligent image matting technology in the cloud 300, primitives in the image 1 may be extracted, for example, an "apple" primitive C1 in the image 1 is extracted. Then the extracted primitives are sent to the mobile phone 100. The mobile phone 100 displays the extracted primitives, for example, the "apple" primitive. Sometimes, a plurality of primitives may be extracted, and the user can select a to-be-transmitted primitive from the plurality of primitives. For example, the user selects the "apple" primitive. In this case, the mobile phone 100 sends the "apple" primitive to the cloud 300, and the cloud 300 forwards the "apple" primitive to the computer 200, so that the computer 200 displays the "apple" primitive at a fixed position on an interface of the image processing software.

However, the computer 200 can only display the received primitive at the fixed position in a fixed form. As a result, the user cannot directly obtain effect of a desired placement position, and further needs to adjust a placement position of the primitive on a screen by performing another operation such as dragging, resulting in poor interaction.

### SUMMARY

To resolve the foregoing problem, this application provides a display method, a medium, and an electronic device. In the display method, when there is a specific relative angle and a specific relative distance between a first electronic device and a second electronic device, after a screen of the first electronic device displays a captured picture in a case that a primitive is at a user-desired specific placement position on a screen of the second electronic device, the screen of the second electronic device displays the primitive received from the first electronic device, and displays the primitive based on a corresponding display angle and display size. It may be understood that, when the second electronic device performs display based on the corresponding display angle and display size, a placement status of the primitive displayed on the second electronic device is consistent with a rotation angle and a relative size of the primitive on the captured picture of the first electronic device relative to a screen region of the second electronic device. In this way, user interaction is improved.

According to a first aspect, an embodiment of this application provides a display method, including: A first electronic device detects a first sharing operation performed by a user for sharing first information with a second electronic device, and the first electronic device performs image shooting on a display screen of the second electronic device based on first position information. The second electronic device displays the first information based on a first display parameter. The first electronic device detects a second sharing operation performed by the user for sharing second information with the second electronic device, and the first electronic device performs image shooting on the display screen of the second electronic device based on second position information. The second electronic device displays the second information based on a second display parameter. The first position information and the second position information include at least one of a relative distance and a relative angle between the first electronic device and the second electronic device, and the first display parameter and the second display parameter include at least one of a display ratio and a display angle.

It may be understood that a sharing operation performed by the user may be an operation in a plurality of forms. For example, the sharing operation may be a physical operation such as tapping performed by the user on a screen of the first electronic device, or an operation in which the user currently maintains a gaze on the screen of the second electronic device for duration that reaches preset duration, or the like.

It may be understood that, the first electronic device detects the first sharing operation performed by the user, and the first electronic device performs image shooting on the display screen of the second electronic device based on the corresponding first position information. In this case, a captured picture includes a captured picture of a specific placement position of the first information relative to the second electronic device, for example, a picture of a rotation angle and a relative size of the first information relative to the screen of the second electronic device. It may be understood that the display ratio and the display angle in the first display parameter correspond to the captured picture of the first electronic device. In this case, when the second electronic device displays the first information based on the corresponding first display parameter, the first display parameter includes at least one of the display ratio and the display angle. In this case, when the second electronic device displays the first information, the rotation angle and the relative size of the first information when the first information is displayed on the first electronic device relative to the second electronic device are displayed on the screen of the second electronic device. In this way, user interaction is improved.

In a possible implementation of the first aspect, the first information and the second information each is an image or a primitive in an image.

In a possible implementation of the first aspect, the display ratio is a ratio of a size of the first information displayed on the second electronic device to a size of the first information displayed on the first electronic device.

In a possible implementation of the first aspect, the first position information includes a first relative distance, and the first display parameter includes a first display ratio; the second position information includes a second relative distance, and the second display parameter includes a second display ratio, where the first relative distance is less than the second relative distance, and the first display ratio is less than the second display ratio.

It may be understood that when performing image shooting on the screen of the second electronic device by using the screen of the first electronic device, the user may adjust, by correspondingly changing the relative distance by moving the first electronic device closer to or farther away from the second electronic device, the relative size of the first information displayed on the screen of the first electronic device relative to the screen of the second electronic device. When the screen of the first electronic device is far away from the screen of the second electronic device, the screen of the second electronic device in a picture displayed on the screen of the first electronic device becomes smaller. However, a size of the first information is unchanged. In this case, the first information becomes larger relative to the screen of the second electronic device. As a result, the display ratio is large. For another example, when the user moves the screen of the first electronic device to the screen of the second electronic device, in a picture displayed on the screen of the first electronic device, the screen of the second electronic device becomes larger. However, a size of the first information is unchanged. In this case, the first information becomes smaller relative to the screen of the second electronic device. As a result, the display ratio is small.

It may be understood that the user may correspondingly adjust, based on adjustment of the relative distance between the first electronic device and the second electronic device, a size of a primitive/image displayed on the second electronic device, thereby improving user experience.

In a possible implementation of the first aspect, the method further includes: The first position information includes a first relative angle, and the first display parameter includes a first display angle. The second position information includes a second relative angle, and the second display parameter includes a second display angle. The first relative angle is less than the second relative angle, and the first display angle is less than the second display angle.

It may be understood that, when performing image shooting on the screen of the second electronic device by using the screen of the first electronic device, the user may adjust, by changing the relative angle between the first electronic device and the second electronic device, the rotation angle of the first information displayed on the screen of the first electronic device relative to the screen of the second electronic device. It may be understood that the display angle of the first information on the second electronic device is proportional to the rotation angle of the first information displayed on the screen of the first electronic device relative to the screen of the second electronic device. This is because the rotation angle of the first information displayed on the screen of the first electronic device relative to the screen of the second electronic device is proportional to the relative angle of the first electronic device relative to the second electronic device. Therefore, a larger first relative angle indicates a larger corresponding first display angle.

It may be understood that the user may correspondingly adjust, based on adjustment of the relative angle between the first electronic device and the second electronic device, a display angle of a primitive/image displayed on the second electronic device, thereby improving user experience.

In a possible implementation of the first aspect, the first information includes a first primitive in a first image, and the method further includes: After detecting the first sharing operation, the first electronic device extracts the first image or a plurality of primitives that are in a first region and that are selected by the user from the first image. The first electronic device displays the plurality of primitives, and sends, to the second electronic device, a first primitive selected by the user from the plurality of primitives.

It may be understood that, after the first electronic device extracts the plurality of primitives, the user may select a to-be-transmitted primitive. This provides the user with ample choices and allows the user to be more selective.

In a possible implementation of the first aspect, the first information includes a first primitive in a first image, and the method further includes: After detecting the first sharing operation, the first electronic device extracts a primitive in the first image. The first electronic device displays the extracted primitive as the first primitive, and sends the first primitive to the second electronic device.

It may be understood that, after extracting a primitive, the first electronic device transmits the primitive to the second electronic device, thereby improving efficiency of the sharing operation.

In a possible implementation of the first aspect, the first information is displayed in a first application interface of the second electronic device.

In a possible implementation of the first aspect, the method further includes: The first electronic device sends, to the second electronic device, first screen background image information of a first screen background image (namely, a first screen background in the following) that is obtained through image shooting on the display screen of the second electronic device based on the first position information. The second electronic device determines the first display parameter based on the first screen background image information.

In a possible implementation of the first aspect, the first screen background image information includes a plurality of first image feature points (for example, first feature points in the following) of the first screen background image. That the second electronic device determines the first display parameter based on the first screen background image information includes: The second electronic device determines the first display parameter based on the plurality of first image feature points of the first screen background image and a plurality of second image feature points (for example, second feature points in the following) that are in a first screen image on a current display interface of the second electronic device and that correspond to the plurality of first image feature points.

It may be understood that the first screen image of the current display interface of the second electronic device is a second screen background in the following.

It may be understood that the first electronic device sends an image feature point as screen background image information to the second electronic device. The image feature point is smaller in data size than an original image, so that transmitting information about the feature point can effectively reduce an amount of data sent, thereby reducing transmission power consumption.

In a possible implementation of the first aspect, the first display parameter includes a first display ratio. That the second electronic device determines the first display parameter based on the plurality of first image feature points of the first screen background image and the plurality of second image feature points that are in the first screen image on the current display interface of the second electronic device and that correspond to the plurality of first image feature points includes: obtaining a spatial transformation matrix based on the plurality of first image feature points and the plurality of second image feature points; determining, from the first screen image on the current display interface of the second electronic device based on the spatial transformation matrix, a second central point corresponding to a first central point of the first screen background image and a second offset point corresponding to a first offset point of the first screen background image; obtaining, through calculation, a first distance based on coordinates of the first central point and coordinates of the first offset point, and obtaining, through calculation, a second distance based on coordinates of the second central point and coordinates of the second offset point; and obtaining the first display ratio based on a ratio between the first distance and the second distance.

In a possible implementation of the first aspect, the first display parameter includes a first display angle. That the second electronic device determines the first display parameter based on the plurality of first image feature points of the first screen background image and the plurality of second image feature points that are in the first screen image on the current display interface of the second electronic device and that correspond to the plurality of first image feature points includes: obtaining a spatial transformation matrix based on the plurality of first image feature points and the plurality of second image feature points; determining, from the first screen image on the current display interface of the second electronic device based on the spatial transformation matrix, a second central point corresponding to a first central point of the first screen background image and a second offset point corresponding to a first offset point of the first screen background image; calculating a first angle between a straight line in which the first central point and the first offset point are located and a first coordinate axis in a coordinate system of the second electronic device, and calculating a second angle between a straight line in which the second central point and the second offset point are located and the first coordinate axis in the coordinate system of the second electronic device; and obtaining the first display angle based on a difference between the first angle and the second angle.

According to a second aspect, an embodiment of this application provides an electronic device, including one or more processors and one or more memories. The one or more memories store one or more programs, and when the one or more programs are executed by the one or more processors, the electronic device is enabled to perform the display method according to any one of the first aspect or the implementations of the first aspect.

According to a third aspect, an embodiment of this application provides a computer-readable storage medium. The storage medium stores instructions, and when the instructions are executed on a computer, the computer is enabled to perform the display method according to any one of the first aspect or the implementations of the first aspect.

According to a fourth aspect, a computer program product is provided, including computer readable code or a non-volatile computer-readable storage medium carrying computer readable code. When the computer readable code is run in an electronic device, a processor in the electronic device performs the display method according to any one of the first aspect or the possible implementations of the first aspect.

According to a fifth aspect, a chip is provided. When the chip is run, the chip performs the display method according to any one of the first aspect or the possible implementations of the first aspect.

### BRIEF DESCRIPTION OF DRAWINGS

FIG. 1 is a diagram in which a mobile phone 100 shares data with a computer 200 by using a cloud 300 according to some embodiments of this application;
FIG. 2 is a diagram of a process in which a mobile phone 100 extracts a primitive by using a computer 200 and enables the primitive to be displayed at a corresponding position of the computer 200 according to some embodiments of this application;
FIG. 3A is a diagram of a connection between a mobile phone 100 and a computer 200 according to some embodiments of this application;
FIG. 3B is a diagram of a process in which a mobile phone 100 extracts and displays a primitive according to some embodiments of this application;
FIG. 3C is a diagram in which a computer 200 displays a primitive after a mobile phone 100 is rotated according to some embodiments of this application;
FIG. 4A is another diagram in which a computer 200 displays a primitive after a mobile phone 100 is rotated according to some embodiments of this application;
FIG. 4B is a diagram of a first screen background B1 according to some embodiments of this application;
FIG. 4C-1 and FIG. 4C-2 are diagrams of a mobile phone picture W4 corresponding to a distance h1 between a mobile phone 100 and a screen of a computer 200 and a mobile phone picture W5 corresponding to a distance h2 between the mobile phone 100 and the screen of the computer 200, when relative angles between the mobile phone 100 and the computer 200 are consistent, according to some embodiments of this application;

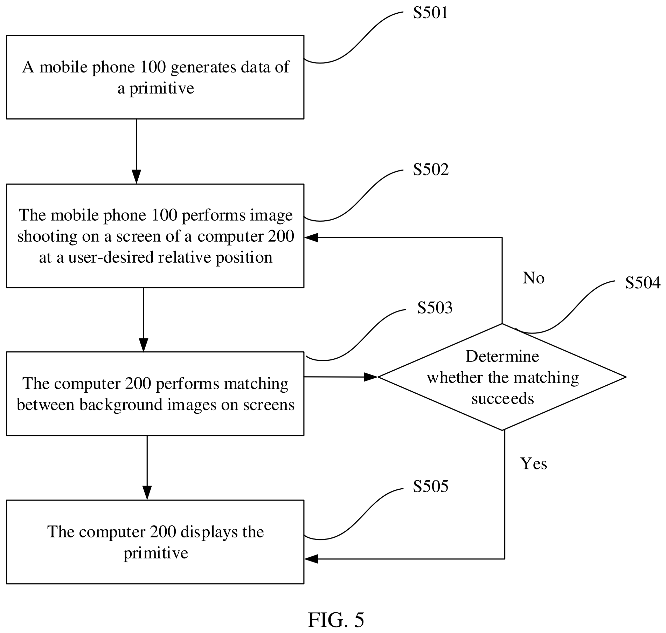

FIG. 5 is a diagram of a process of a display method according to some embodiments of this application;

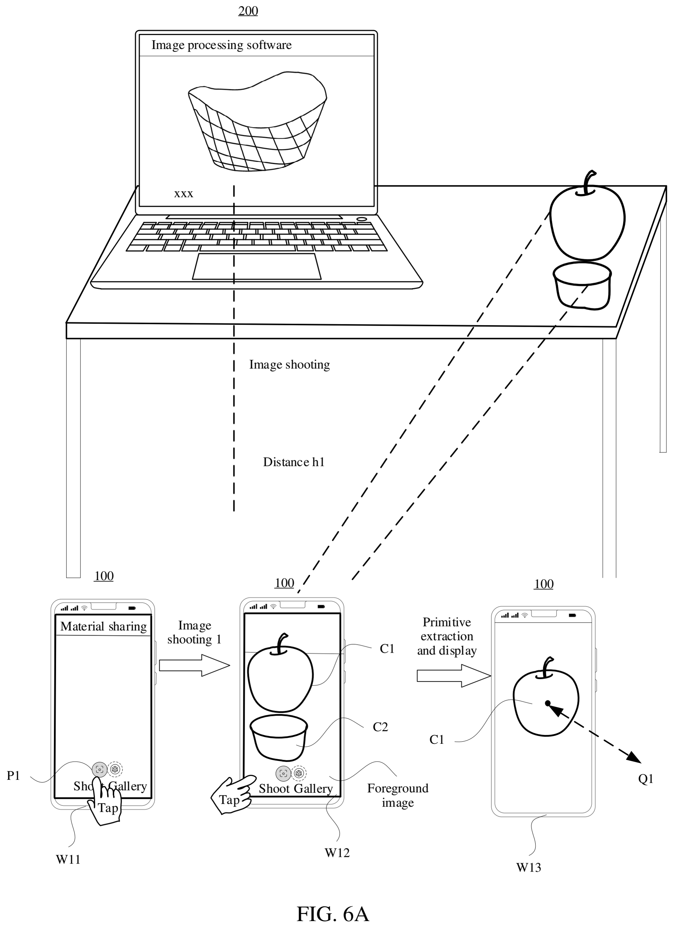

FIG. 6A is a diagram in which a mobile phone 100 obtains an image through image shooting according to some embodiments of this application;

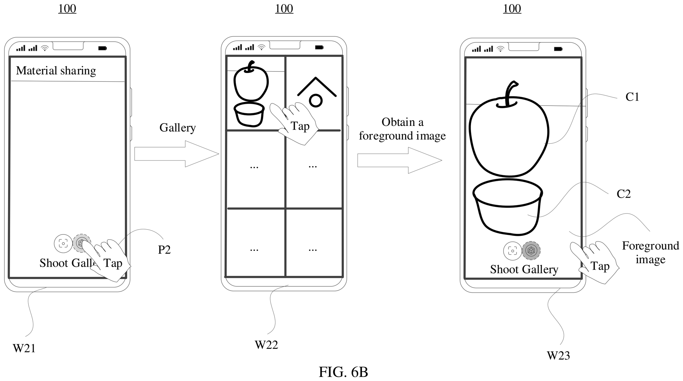

FIG. 6B is a diagram in which a mobile phone 100 obtains a foreground image through a gallery according to some embodiments of this application;

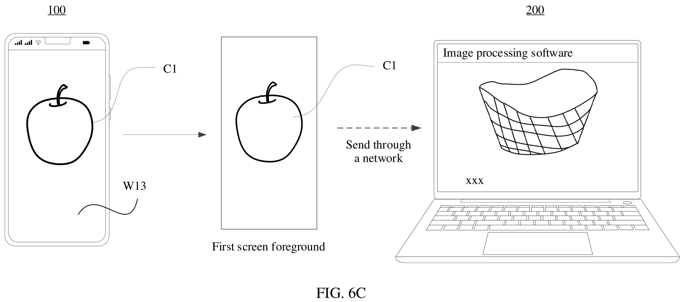

FIG. 6C is a diagram in which a mobile phone 100 transmits a displayed primitive to a computer 200 according to some embodiments of this application;

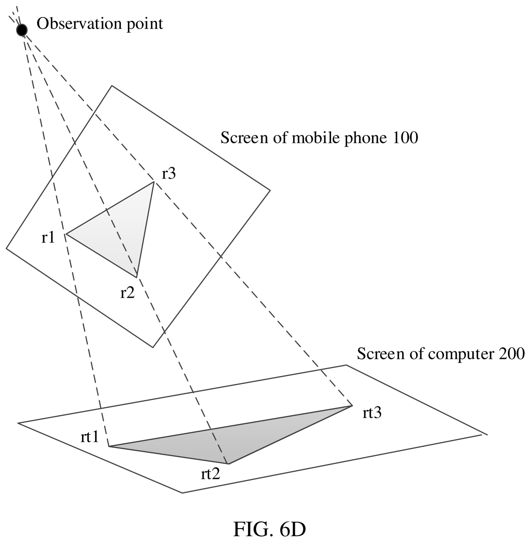

FIG. 6D is a three-dimensional diagram in which a screen of a mobile phone 100 displays a computer 200 according to some embodiments of this application;

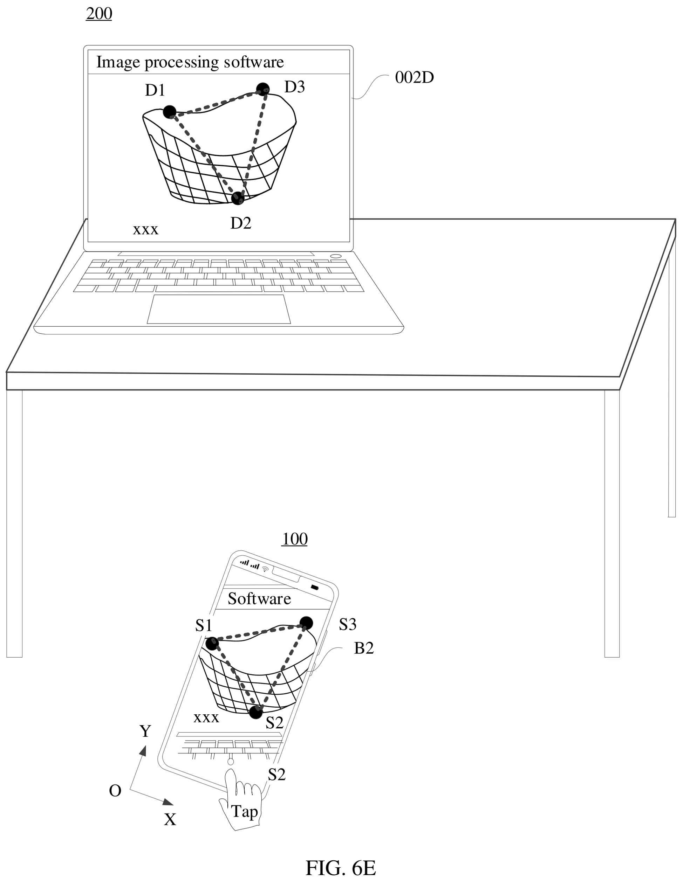

FIG. 6E is a diagram of a correspondence between pixels on a first screen background of a mobile phone 100 and pixels on a second screen background of a computer 200 according to some embodiments of this application;

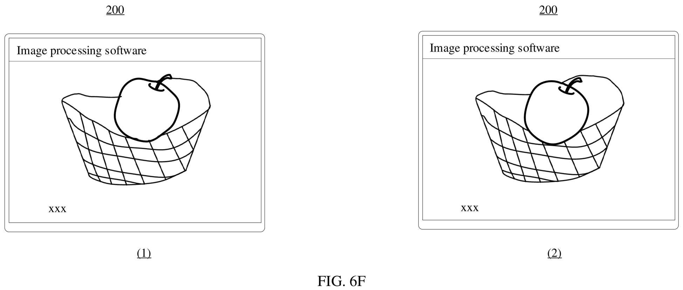

FIG. 6F is a diagram of comparison between a case in which a computer 200 performs display without post-processing optimization and a case in which the computer 200 performs display with post-processing optimization according to some embodiments of this application;

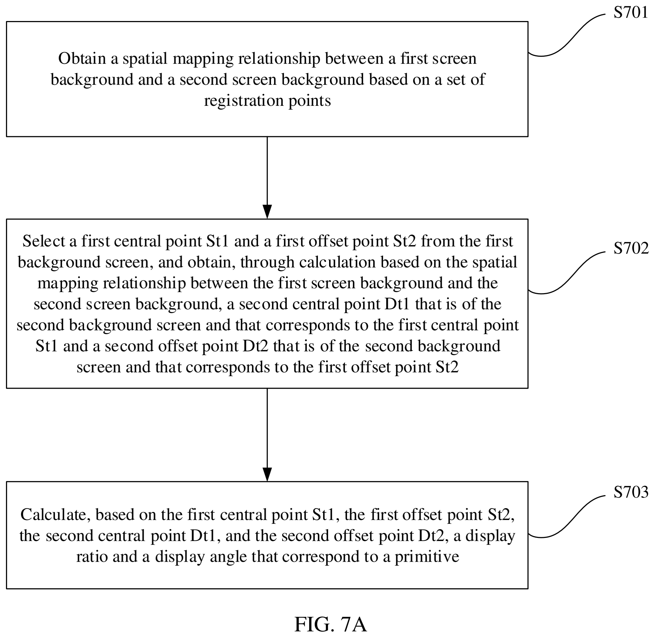

FIG. 7A is a diagram of a process of obtaining a display angle and a display ratio according to some embodiments of this application;

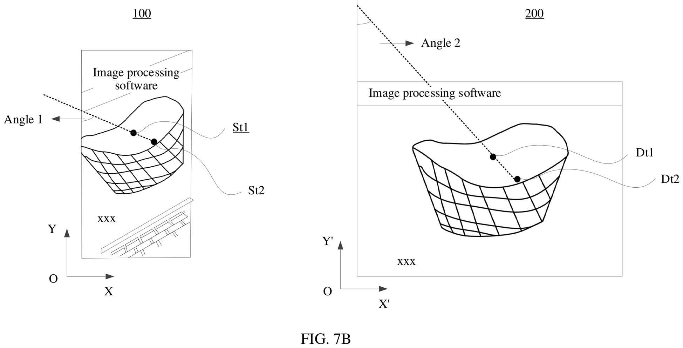

FIG. 7B is a diagram of a correspondence between a central point of a first screen background and a central point of a second screen background as well as between an offset point of the first screen background and an offset point of the second screen background according to some embodiments of this application;

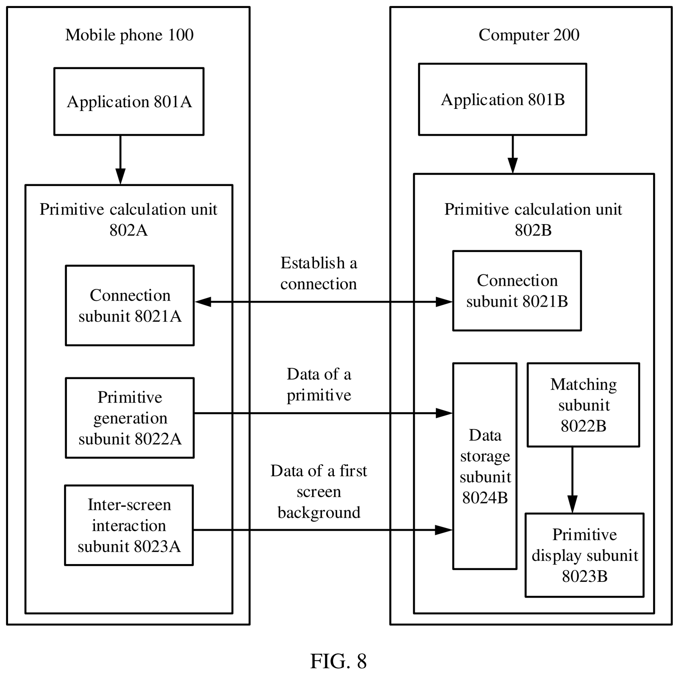

FIG. 8 is a diagram of a structure of a functional module of a mobile phone 100 according to some embodiments of this application;

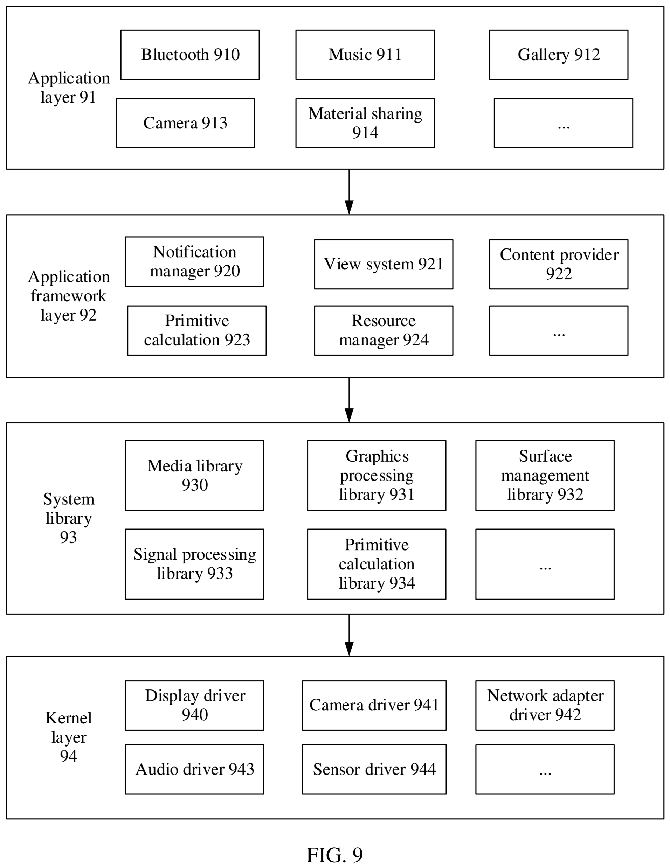

FIG. 9 is a diagram of a structure of a software system of a mobile phone 100 according to some embodiments of this application; and

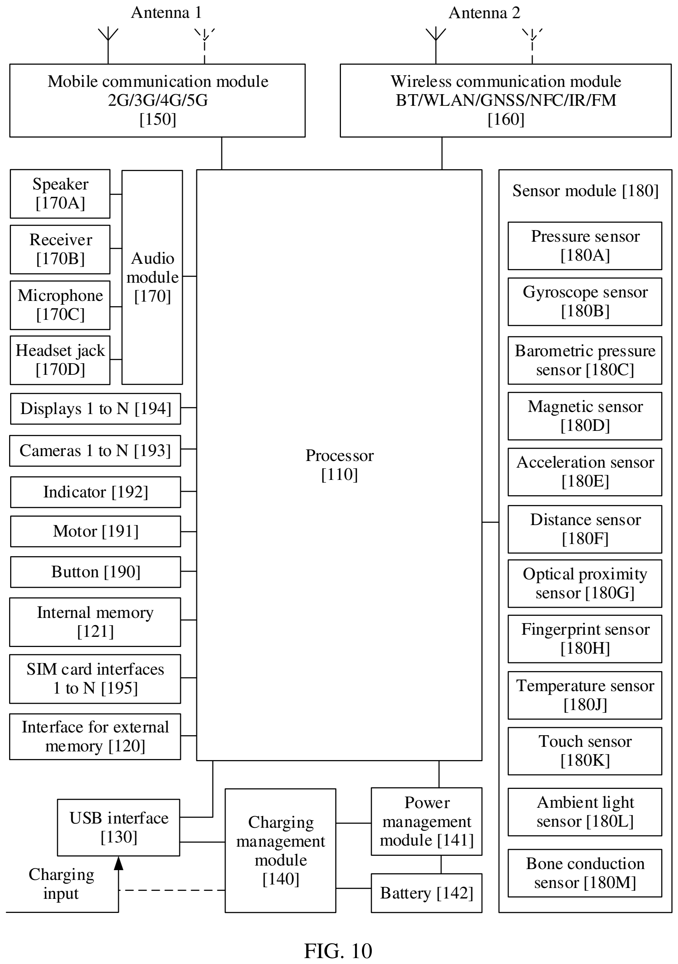

FIG. 10 is a diagram of a hardware structure of an electronic device according to some embodiments of this application.

### DESCRIPTION OF EMBODIMENTS

Illustrative embodiments of this application include but are not limited to a display method, a medium, an electronic device, and the like.

**The following describes the technical solutions of this application in detail with reference to the accompanying drawings.**

As described in the background, a computer 200 can only display a primitive at a fixed position on a screen, and cannot directly display the primitive at a placement position desired by a user, resulting in poor interaction with the user.

In some embodiments, after a mobile phone 100 obtains a primitive desired by the user, the user may perform image shooting on a screen of the computer 200 by using a camera function of the mobile phone 100 while displaying the primitive on a screen of the mobile phone 100. In this case, the screen of the mobile phone 100 may display a specific placement position of the primitive on the computer 200. Then, the mobile phone 100 sends, to the computer 200, an image that displays the specific position of the primitive on the screen of the computer 200. In this case, the computer 200 may place the image at the corresponding position.

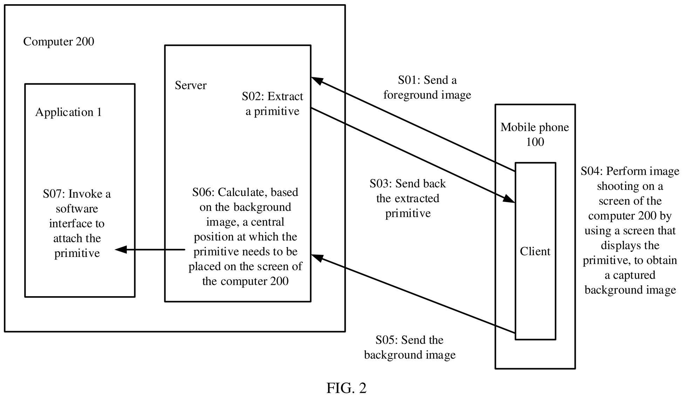

Specifically, FIG. 2 is a diagram of a process in which a mobile phone 100 extracts a primitive by using a computer 200 and enables the primitive to be displayed at a corresponding position of the computer 200. In addition, the mobile phone 100 establishes a communication connection to the computer 200 by using a wireless communication technology, for example, through Bluetooth, a wireless network, or another manner, for data transmission. For example, as shown in FIG. 2, the process may include the following steps.

S01: The mobile phone 100 sends an obtained foreground image to the computer 200, where the foreground image includes a primitive that needs to be extracted.

It may be understood that the image includes a plurality of regions with salient features. For example, a region with a salient feature (namely, a salient region) may be a specific person, object, text, or the like, and the region with the salient feature may be used as a primitive.

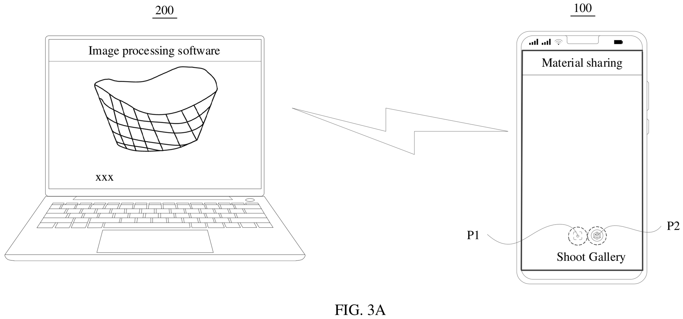

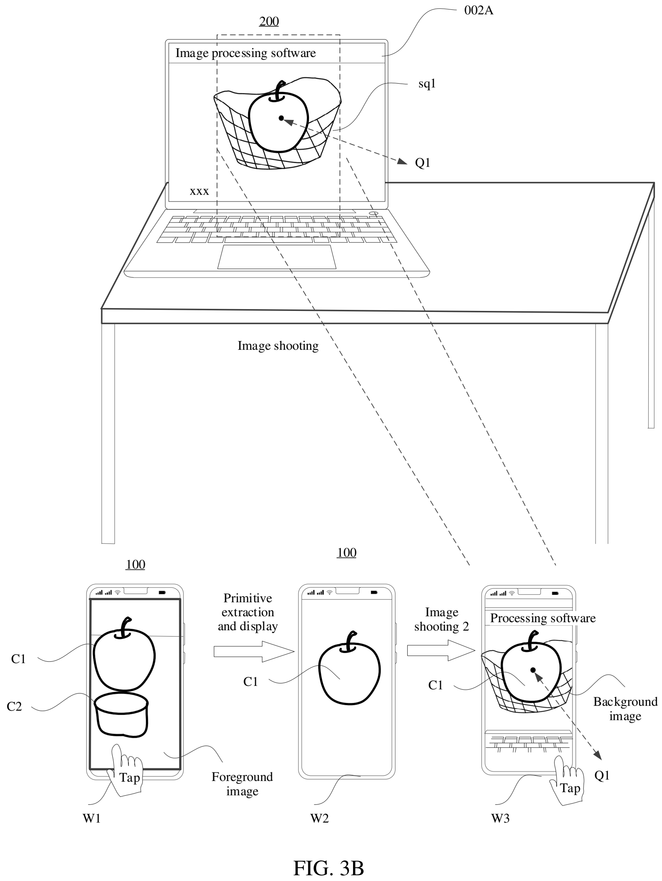

For example, as shown in FIG. 3A, the user wants to make a poster by using image processing software on the computer 200. In this case, there is already a "basket" on the poster, and the user may obtain an image material by using material sharing software on the mobile phone 100. The computer 200 establishes a connection to the mobile phone 100 through a network, and the material sharing software on the mobile phone 100 supports primitive transmission with the image processing software on the computer 200. A "Shoot" button P1 corresponding to the material sharing software on the mobile phone 100 supports obtaining of the foreground image through image shooting, and a "Gallery" button P2 corresponding to the material sharing software on the mobile phone 100 supports obtaining of the foreground image from a gallery. After obtaining a foreground image shown on a mobile phone picture W1 in FIG. 3B, the user may tap the screen of the mobile phone 100. In this case, the mobile phone 100 sends the foreground image shown on the mobile phone picture W1 in FIG. 3B to the computer 200.

It may be understood that, in addition to the foregoing image processing software, the computer 200 may use any other application; and in addition to the foregoing material sharing software, and the mobile phone 100 may use any other application. For example, a third-party application or an application supported by a system may be used. This is not limited herein.

S02: A server in the computer 200 extracts a primitive in the foreground image. For example, the primitive in the foreground image may be extracted to obtain an "apple" primitive C1 and a "bowl" primitive C2.

S03: The computer 200 sends the extracted primitive to the mobile phone 100, for example, sends the extracted "apple" primitive C1 and the extracted "bowl" primitive C2 to the mobile phone 100.

S04: After receiving the primitives, the mobile phone 100 may select, by default, a primitive with a larger size and display the primitive on the screen.

For example, the "apple" primitive C1 is displayed in a mobile phone picture W2 in FIG. 3B. In this case, the mobile phone 100 may perform image shooting on the screen of the computer 200 while displaying the primitive on the screen. After the mobile phone 100 detects a tap operation performed by the user, or the mobile phone 100 automatically detects that the mobile phone 100 is aligned with the computer 200, a captured background image may be obtained. For example, the user performs image shooting on an image shooting region sq1 of the computer 200 by using the mobile phone 100 that displays the "apple" primitive through a camera function of the mobile phone 100, to obtain a background image shown on a mobile phone picture W3 in FIG. 3B.

S05: The mobile phone 100 sends the background image to the computer 200.

S06: Based on the background image, the server in the computer 200 calculates a central position at which the primitive needs to be placed on the screen of the computer 200. For example, based on a specific position of a central point Q1 of the "apple" primitive C1 in the background image on the captured image shooting region sq1, the server in the computer 200 calculates the central position at which the central point Q1 of the "apple" primitive C1 needs to be placed on the screen of the computer 200.

S07: The image processing software of the computer 200 invokes a software interface to place the primitive at the central position obtained through calculation. For example, in a display picture 002A of the computer 200 in FIG. 3B, the "apple" primitive C1 is placed at the central position on the computer screen.

However, after receiving the background image, the computer 200 calculates only the central position at which the primitive is displayed on the computer screen. In this case, a size or a rotation angle of the primitive in the background image relative to the image shooting region is not considered during display, resulting in poor user interaction.

Specifically, the size of the primitive in the background image relative to the image shooting region is not considered during display on the computer. It may be understood that, the camera of the mobile phone 100 has a perspective function. In this case, a size of the image shooting region captured by the mobile phone 100 at a specific relative distance from the computer 200 is different from an actual size of the image shooting region. The relative distance may be understood as a distance from a center of gravity of the mobile phone 100 to a computer plane, where the computer plane is a plane on which the screen of the computer 200 is located. For example, in the mobile phone picture W3 in FIG. 3B, the size of the image shooting region displayed on the background image of the mobile phone 100 is different from the actual size of the image shooting region sq1. Therefore, when the primitive is displayed in a same size as the primitive in the background image on the image shooting region sq1 of the computer 200, user-desired effect as effect in the background image cannot be achieved. For example, in FIG. 3B, an area that is of the image shooting region and that is occupied by the "apple" primitive displayed on the picture 002A displayed on the computer 200 is smaller than an area that is of the image shooting region and that is occupied by the "apple" primitive in the background image of the mobile phone 100.

In addition, the rotation angle of the primitive in the background image relative to the image shooting region is not considered during display.

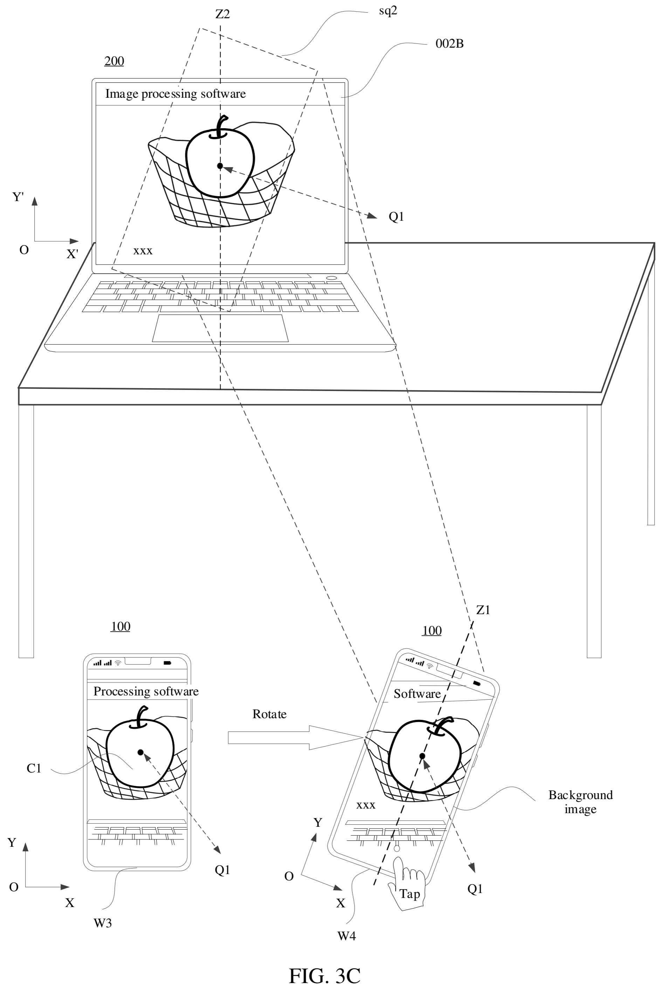

It may be understood that data of the image captured by the mobile phone 100 is represented by using an XOY coordinate system (for example, a long frame of the mobile phone is a Y axis, and a short frame of the mobile phone is an X axis) shown in FIG. 3C, and the computer 200 is represented by using an X'OY' coordinate system (for example, a long frame of the computer is an X axis, and a short frame of the computer is a Y axis) shown in FIG. 3C.

During image shooting, the mobile phone 100 may be rotated by the user to adjust a specific position of the primitive on the screen of the mobile phone 100 on the captured screen of the computer 200. In this case, there is a relative angle between the mobile phone 100 and the computer 200. The relative angle may be an angle value between a central axis of the screen of the mobile phone 100 and a central axis of the screen of the computer 200. When the mobile phone 100 and the computer 200 are vertically placed in a gravity direction, the central axis of the mobile phone 100 is parallel to the central axis of the computer 200.

After the mobile phone 100 is rotated relative to the computer 200 in space, the relative angle between the mobile phone 100 and the computer 200 is a relative included angle between the central axis Z1 of the mobile phone 100 and the central axis Z2 of the computer 200 shown in FIG. 3C. In the picture captured by the mobile phone 100, the primitive does not change in the XOY coordinate system, but is rotated in the X'OY' coordinate system. In the picture captured by the mobile phone 100, the computer 200 changes in the XOY coordinate system, but is not rotated in the X'OY' coordinate system. In this case, in the picture captured by the mobile phone 100, the primitive is rotated relative to the screen of the computer 200. For example, the X'OY' coordinate system is used as a reference. As shown in FIG. 3C, when the mobile phone picture W3 in FIG. 3C is displayed on the mobile phone 100, the user rotates the mobile phone 100. In this case, the specific position of the "apple" primitive on the screen of the mobile phone does not change, so that the "apple" primitive is rotated as the mobile phone is rotated. In this case, the "apple" primitive is rotated in the X'OY' coordinate system. However, the screen of the computer 200 in the image shooting region captured by the mobile phone is not rotated in the X'OY' coordinate system. As a result, in the mobile phone picture W4 in FIG. 3C displayed on the mobile phone 100, the "apple" primitive is rotated relative to the captured computer 200. After the user performs the tap operation, a background image such as in the mobile phone picture W4 is obtained. It can be learned from the background image that the user wants the rotated "apple" primitive to be displayed on the captured screen of the computer 200. However, an "apple" primitive displayed in an image shooting region sq2 on a display picture 002B of the computer 200 in FIG. 3C is not rotated.

Therefore, to resolve the foregoing problem, this application provides a display method. When there is a specific relative angle and a specific relative distance between a first electronic device (for example, a mobile phone 100) and a second electronic device (for example, a computer 200), after a screen of the first electronic device displays a captured picture in a case that a primitive is at a user-desired specific placement position on a screen of the second electronic device (for example, the computer 200), based on a rotation angle of the primitive in the captured picture of the first electronic device relative to the screen of the second electronic device and a relative size of the primitive relative to the captured screen of the second electronic device, the second electronic device may adjust, according to the rotation angle and relative size of the captured picture relative to the screen of the second electronic device, a display angle and a display ratio of the primitive placed on the screen of the second electronic device. In this way, placement of the primitive displayed on the second electronic device is consistent with the rotation angle and the relative size of the primitive in the captured picture of the first electronic device relative to a screen region of the second electronic device. In this way, user interaction is improved.

The display angle at which the primitive is placed on the screen of the second electronic device is a value of an included angle between a central axis that is on the screen of the second electronic device and that passes through a central point of the primitive and a central axis of the screen of the second electronic device.

The display ratio of the primitive placed on the screen of the second electronic device is a ratio of a size of the primitive displayed on the second electronic device to a size of the primitive displayed on the first electronic device.

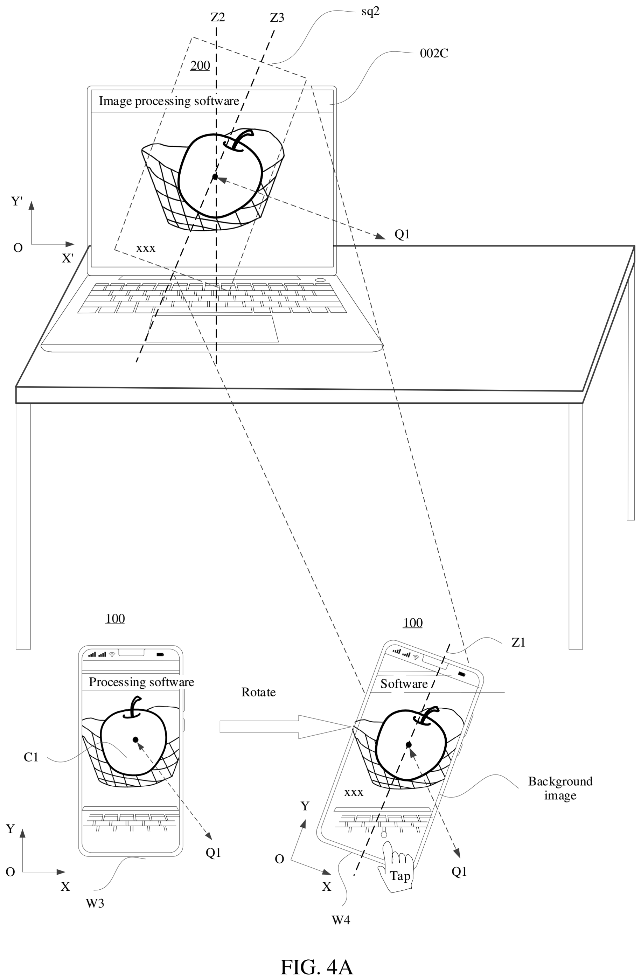

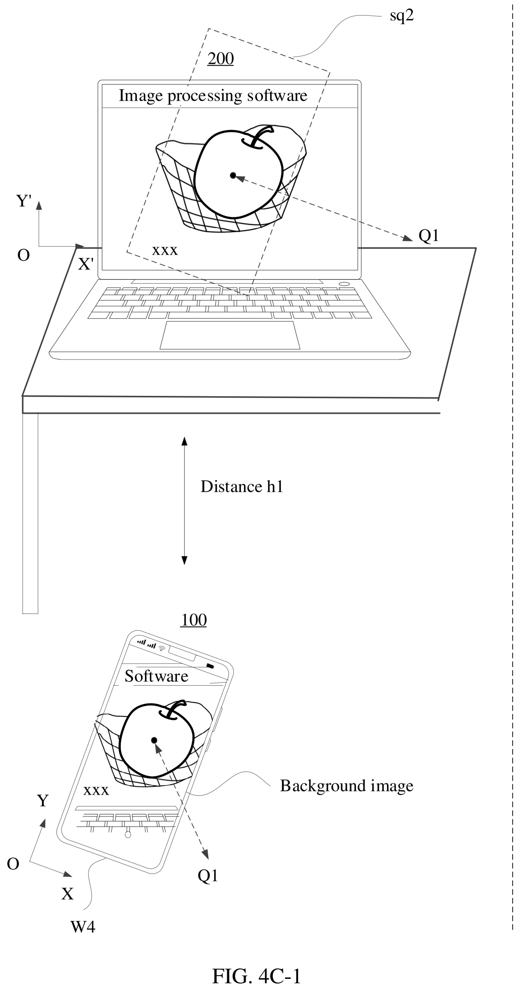

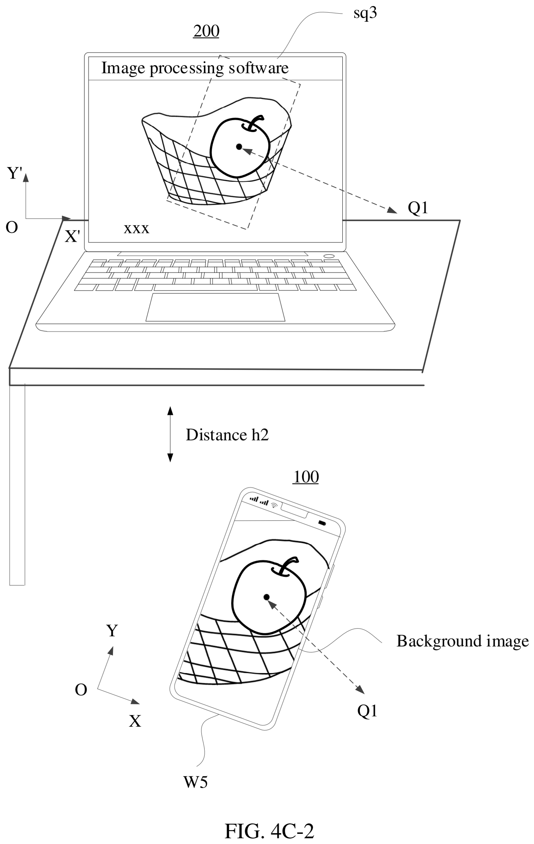

For example, as shown in FIG. 4A, for a mobile phone picture W4 of the mobile phone 100, in a display picture 002C of the computer 200, an "apple" primitive is displayed at a display angle corresponding to a rotation angle of the "apple" primitive in the mobile phone picture W4 of the mobile phone 100, and is zoomed in based on the display ratio corresponding to a relative size of the display picture, so that an area occupied in an image shooting region is almost the same as an area occupied in the mobile phone picture W4 of the mobile phone 100, thereby improving user interaction. In this case, the display angle is an included angle between a central axis Z3 that passes through a central point Q1 of the "apple" primitive and a central axis Z2 of the screen of the computer 200, as shown in FIG. 4A. When a plane on which the screen of the computer 200 is located is parallel to a plane on which the screen of the mobile phone 100 is located, Z3 is parallel to a central axis Z1 of the mobile phone 100.

Specifically, the computer 200 may calculate, in an X'OY' coordinate system and based on related data of a first screen background (that is, a picture corresponding to the image shooting region) in an XOY coordinate system of the mobile phone 100 and related data of an actual display picture in the current X'OY' coordinate system, a rotation angle and a relative size of the image shooting region that is captured relative to the actual display picture of the computer 200, to obtain the display angle and the display ratio that need to be adjusted when the primitive is placed.

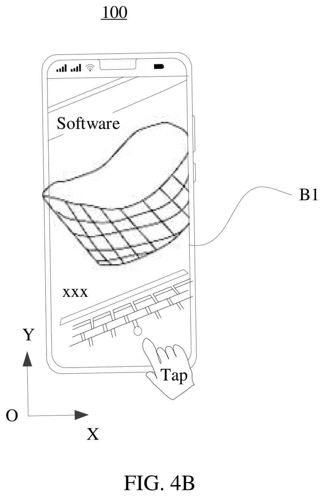

For example, in some embodiments, the mobile phone 100 may send, to the computer 200, a feature point of the first screen background in the XOY coordinate system, and the computer 200 obtains, through calculation, based on the feature point of the first screen background, the corresponding display angle and display ratio when the primitive is placed. The feature point can reflect salient information of the first screen background, and a value of the feature point may include a pixel value, coordinates, a scale (Gaussian parameter), a principal direction, a direction gradient descriptor, and the like. For example, FIG. 4B shows a first screen background B1 corresponding to the mobile phone picture W4 in FIG. 4A. In this case, a feature point of the first screen background B1 may be extracted and sent to the computer 200. For example, there are 1000 feature points in the first screen background, where one feature point may be pixel information indicating a "basket" at an edge of the first screen background, and one feature point may be pixel information indicating a center of the first screen background.

It may be understood that information about the feature point of the first background image is smaller in data size than an original image, so that transmitting information about the feature point can effectively reduce an amount of data sent, thereby reducing transmission power consumption.

It may be understood that, in some embodiments, when performing image shooting on the screen of the computer 200 by using the screen of the mobile phone 100, the user may adjust a relative size of the primitive displayed on the screen relative to the screen of the computer 200 by moving the mobile phone 100 closer to or farther away from the computer 200. Specifically, when the user moves the screen of the mobile phone 100 farther away from the screen of the computer 200, in a picture displayed on the screen of the mobile phone 100, the screen of the computer 200 becomes smaller. However, a size of the primitive is unchanged. In this case, the primitive becomes larger relative to the screen of the computer 200. For another example, when the user moves the screen of the mobile phone 100 closer to the screen of the computer 200, in a picture displayed on the screen of the mobile phone 100, the screen of the computer 200 becomes larger. However, a size of the primitive is unchanged. In this case, the primitive becomes smaller relative to the screen of the computer 200.

For example, it is assumed that an image shooting distance corresponding to a mobile phone picture W5 in FIG. 4C-1 and FIG. 4C-2 is h2. FIG. 4C-1 and FIG. 4C-2 show a mobile phone picture corresponding to different relative distances (in the figure, the distance h1 and a distance h2 are the specific different relative distances) when relative angles between the mobile phone 100 and the computer 200 are consistent in space. The mobile phone picture W4 corresponds to the distance h1 between the mobile phone 100 and the screen of the computer 200, and the mobile phone picture W5 corresponds to the distance h2 between the mobile phone 100 and the screen of the computer 200. The distance h1 is greater than the distance h2, so that an image shooting region sq2 captured at the distance h1 is larger than an image shooting region sq3 captured at the distance h2. In this case, the size of an "apple" primitive C1 relative to the screen of the computer 200 is larger at the distance h1 than at the distance h2. Therefore, as shown in FIG. 4C-1 and FIG. 4C-2, when the "apple" primitive is displayed on the screen of the computer 200, an "apple" on the screen of the computer 200 corresponding to the mobile phone picture W4 is greater than an "apple" on the screen of the computer 200 corresponding to the mobile phone picture W5.

It may be understood that, in addition to the foregoing scenario in which the poster needs to be made, the display method mentioned in this application may be further applied to any other scenario in which an image material needs to be added when another application is used. This is not limited herein.

It may be understood that, in the display method mentioned in this application, in addition to being used to transmit the primitive to the computer 200, the mobile phone 100 may be further used to transmit an entire image to the computer 200. In this case, the mobile phone 100 directly displays, on a preset position of the screen of the mobile phone 100 based on a specific size, a captured image or an image obtained from a gallery, without a need to perform a primitive operation. Then, the mobile phone 100 performs image shooting on the screen of the computer 200 while displaying the image on the screen, so that the image is displayed on the computer 200 based on a corresponding display ratio and display angle.

It may be understood that the first electronic device and the second electronic device mentioned in this application may be any electronic device having a screen display function, including but not limited to a mobile phone, a tablet computer, an in-vehicle device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), a server, and the like. The first electronic device and the second electronic device are not limited in embodiments of the present invention.

It may be understood that, the screen picture captured by the mobile phone without displaying an overlaid primitive is referred to as the "first screen background". In this case, for ease of description, an actual screen picture of the computer 200 is referred to as a "second screen background".

The following specifically describes a display process by using an example in which the first electronic device is the mobile phone 100 and the second electronic device is the computer 200.

FIG. 5 is a schematic flowchart in which after a mobile phone 100 obtains a primitive and performs image shooting on a screen of a computer 200 by using a camera, the primitive can be displayed on the screen of the computer 200 based on a display angle and a display ratio, according to some embodiments of this application. A specific process includes the following steps.

S501: The mobile phone 100 generates data of the primitive.

In some embodiments, the mobile phone 100 may obtain an image through a gallery or another manner such as image shooting, invoke an image matting algorithm to extract a salient region, to generate the data of the primitive, and display the generated data of the primitive at a preset position of the computer 200. In other words, a central point of the primitive corresponds to a preset central position. In addition, the mobile phone 100 sends, to the computer 200, the primitive displayed at the preset position of the computer 200.

In some implementations, when an image has a plurality of salient regions, the mobile phone 100 may extract a plurality of primitives corresponding to the plurality of salient regions from the image, or extract a plurality of primitives from a region selected by a user from the image, to generate data of the plurality of primitives, and display the generated data of the plurality of primitives at the preset position of the computer 200. In addition, the mobile phone 100 sends, to the computer 200, the plurality of primitives displayed at the preset position of the computer 200.

In some other implementations, when an image has a plurality of salient regions, the mobile phone 100 may extract a plurality of primitives to generate data of the plurality of primitives, and then display the plurality of primitives on a screen, so that the user selects a desired primitive, and then separately re-displays the desired primitive selected by the user at the preset position of the computer 200. In addition, the mobile phone 100 sends, to the computer 200, the primitive separately re-displayed at the preset position of the computer 200.

In addition, in some implementations, when an image has a plurality of salient regions, the mobile phone 100 may extract the most salient region by default, generate data of one primitive, and then display the generated data of the primitive at the preset position of the computer 200. In addition, the mobile phone 100 sends, to the computer 200, the data of the primitive displayed at the preset position of the computer 200.

For example, FIG. 6A is a diagram in which the mobile phone 100 obtains a foreground image through image shooting and displays a primitive. In a mobile phone picture W11 shown in FIG. 6A, the user selects a "Shoot" button P1, enables a camera function of the mobile phone 100, and performs image shooting on an apple and a bowl on a desktop by using the mobile phone 100. When the user taps the screen of the mobile phone 100 to confirm image shooting, a mobile phone picture W12 shown in FIG. 6A is a picture captured after the user taps the screen of the mobile phone, and an image corresponding to the captured picture is a foreground image. In this case, the mobile phone 100 may extract a primitive by using an image matting algorithm. It is assumed that one primitive of a most salient region is extracted by default, an apple region in the mobile phone picture W12 may be extracted to generate an "apple" primitive C1. In addition, in a mobile phone picture W13 shown in FIG. 6A, the generated "apple" primitive C1 is displayed at a central position of the screen of the mobile phone 100. In this case, a central point of the "apple" primitive C1 coincides with the central position. In addition, as shown in FIG. 6C, the mobile phone 100 sends, to the computer 200, the "apple" primitive C1 corresponding to the mobile phone picture W13 shown in FIG. 6A as a first screen foreground for display after the computer 200 subsequently adjusts the "apple" primitive C1.

For example, FIG. 6B is a diagram in which a mobile phone 100 obtains a foreground image through a gallery. In a mobile phone picture W21 shown in FIG. 6B, the user taps a "Gallery" button P2. In this case, the mobile phone 100 may enter the gallery. As shown in FIG. 6B, six images are displayed in a mobile phone picture 22. The user taps an image in the upper left corner. In this case, the image tapped by the user is displayed on the mobile phone as a foreground image, for example, a mobile phone picture 23 in FIG. 6B. In this case, the mobile phone 100 displays the image in the upper left corner tapped by the user in the mobile phone picture W22 as the foreground image. It may be understood that, after the mobile phone 100 obtains the foreground image, a process of extracting and displaying a primitive is essentially the same as the foregoing described process of extracting and displaying the primitive after the foreground image is obtained through image shooting. Details are not described herein again.

S502: The mobile phone 100 performs image shooting on the screen of the computer 200 at a user-desired relative position, where the relative position includes a relative angle and a relative distance.

It may be understood that the mobile phone 100 may perform image shooting on the screen of the computer 200 while displaying the primitive on the screen, and then adjust the relative angle and the relative distance (for example, through rotation, moving closer to/farther away from each other, and the like) between the mobile phone 100 and the computer 200 during image shooting, to adjust a specific central position, a relative size, and a rotation angle of the primitive on the screen of the mobile phone 100 relative to the captured screen of the computer 200. In this way, desired primitive placement effect is obtained. After detecting that current image shooting effect is the user-desired effect, the mobile phone 100 sends, to the computer 200, related data of the first screen background (for example, a feature point obtained by using a feature extraction algorithm from the first screen background).

Specifically, in some embodiments, the computer 200 is captured by using a camera function of the mobile phone 100. In this case, the mobile phone 100 obtains the first screen background. For example, FIG. 6D shows a corresponding case in which a screen of a computer 200 is displayed on a screen of the mobile phone 100. When the user performs image shooting on the screen (namely, the second screen background) of the computer 200 by using the mobile phone 100, three-dimensional space content is mapped to a two-dimensional plane, and a picture displayed on the screen of the mobile phone 100 corresponds to a part of content of a picture displayed on the screen of the computer 200. Specifically, there is a spatial mapping relationship between a part of content on the first screen background and a part of content on the second screen background. As shown in the figure, a pixel rt1, a pixel rt2, and a pixel rt3 on the screen (the second screen background) of the computer 200 respectively correspond to a pixel r1, a pixel r2, and a pixel r3 on the screen (the first screen background) of the mobile phone 100.

Desired primitive placement effect needs to be obtained. When the mobile phone 100 performs image shooting, a primitive is displayed on the screen of the mobile phone 100, and the user performs image shooting on the computer 200 by using the mobile phone 100 that displays the primitive. In this case, the primitive is overlaid on the captured computer 200.

It may be understood that, during performing image shooting on the computer 200 by using the mobile phone 100, the user may adjust the relative distance and the relative angle (for example, an operation such as rotation, moving closer to/farther away from each other, or tilt) of the mobile phone 100, so that the primitive on the screen of the mobile phone 100 is placed at an expected position on the captured screen of the computer 200. When the user presets a "stop image shooting" operation, after detecting a "stop image shooting" operation instruction of the user, the mobile phone 100 performs feature point extraction, by using a feature extraction algorithm, on image data of the first screen background in a display picture, and sends a first feature point obtained through extraction to the computer 200, where the first feature point can reflect content information of the first screen background.

It may be understood that information about the first feature point is smaller in data size than an original image, so that an amount of data sent can be effectively reduced. The feature extraction algorithm may be a scale-invariant feature transformation (scale-invariant feature transform, SIFT) algorithm, a local binary pattern (local binary patterns, LBP) algorithm, a feature extraction algorithm (histogram of oriented gradient, HOG), or the like. It may be understood that a value of the feature point may include a pixel value, coordinates, a scale (Gaussian parameter), a principal direction, a direction gradient descriptor, and the like.

For example, in the mobile phone picture W3 and the mobile phone picture W4 shown in FIG. 4A, the user rotates the mobile phone 100, and corresponding to the mobile phone picture W4, the user taps the screen to perform the preset "stop image shooting" operation. After the mobile phone 100 detects a "stop image shooting" operation instruction of the user, the mobile phone 100 performs shift feature point extraction on the first screen background B1 shown in FIG. 4B to obtain the first feature point, and sends the first feature point to the computer 200. The first feature point includes salient information of the first screen background B 1, for example, a size of the first screen background B1 and information that is captured and that corresponds to content (such as a basket) of a picture on the screen of the computer 200. It may be understood that feature point data of the first screen background B1 of the mobile phone 100 is represented in a manner of representing data by using a coordinate system of the mobile phone 100.

It may be understood that the foregoing predetermined operation implements an image shooting process. In addition to tapping the screen, the user may further implement the image shooting process by using a physical button (for example, a return button, a volume button, or a power button). A touch and hold operation may alternatively be changed to an operation such as tap, double-tap, press, or slide. A specific predetermined operation is not described herein.

It may be understood that, in some other embodiments, during performing image shooting on the computer 200 by using the mobile phone 100, the user adjusts the corresponding relative distance and relative angle between the mobile phone 100 and the computer 200. In this case, the user may not need to perform the predetermined operation. After the mobile phone 100 automatically detects that the mobile phone 100 is aligned with the computer 200 (for example, a time for which the user is static at a current position exceeds a preset amount of seconds), the mobile phone 100 performs image shooting on the computer 200.

S503: The computer 200 performs matching between background images on the screens.

It may be understood that, a pixel data feature of picture content on the screen of the computer 200 in the first screen background that is obtained through image shooting on the computer 200 by using the mobile phone 100 differs significantly from a pixel data feature of an actual display picture of the second screen background on the computer 200. In this case, feature matching needs to be performed on the first screen background obtained through image shooting by using the mobile phone 100 and the second screen background, to find, from the second screen background, a pixel whose feature is similar to the first feature point in the first screen background, so that a feature point (referred to as a "second feature point" for ease of description) used to represent a pixel whose found features are similar is obtained. A set of registration points is obtained from the first feature point and the second feature point, where there is a one-to-one correspondence between the first feature point and the second feature point in the set of registration points.

In some embodiments, a matching algorithm may be used, for example, k-nearest neighbor (k-nearest neighbor, kNN), to filter the first feature point in the first screen background and pixels in the second screen background, so that pixels with similar features can be found, and the second feature point can be obtained. The first feature point in the first screen background and the second feature point found in the second screen background are used as the set of registration points. For example, the first feature point in the first screen background is ST{ST1, ST2, ST3, ..., STN}, and the second feature point in the second screen background is DT{DT1, DT2, DT3, ..., DTN}.

For example, FIG. 6E shows pixels S1, S2, and S3 that are displayed in a display picture B2 of the mobile phone 100 and that correspond to three feature points ST1, ST2, and ST3 in the first screen background. The feature point ST1 corresponds to the pixel S1 on an upper left edge of a basket, the feature point ST2 corresponds to the pixel S2 on a lower edge of the basket, and the feature point ST3 corresponds to the pixel S3 on an upper right edge of the basket. In addition, FIG. 6E further shows pixels corresponding to the feature points DT1, DT2, and DT3 that correspond to and match the feature points ST1, ST2, and ST3 in the second screen background 002D of the computer 200. The feature point DT1 corresponds to a pixel D1 on an upper left edge of the basket, the feature point DT2 corresponds to a pixel D2 on a lower edge of the basket, and the feature point DT3 corresponds to a pixel D3 on an upper right edge of the basket. It may be understood that features of ST1, ST2, and ST3 correspond to features of DT1, DT2, and DT3. Therefore, the three pixels S1, S2, and S3 in the first screen background are in one-to-one correspondence with the three pixels D1, D2, and D3 in the second screen background.

S504: The computer 200 determines whether the matching succeeds.

It may be understood that when image shooting is performed on the computer 200 by using the mobile phone 100, in the captured first screen background, there is not necessarily a feature point that matches pixel data in the second screen background.

In some embodiments, the computer 200 matches the first feature point in the first screen background with the pixel data in the second screen background. When no pixel whose feature is similar to that of the first feature point is found from the pixel data of the second screen background, the computer 200 determines that the matching fails. In this case, S502 is performed, in which the mobile phone 100 needs to perform inter-screen interaction again, to re-obtain related data of the first screen background that can be used for matching. When a pixel whose feature is similar to that of the first feature point is found from the pixel data of the second screen background, the computer 200 determines that the matching succeeds. In this case, S505 is performed, in which the computer 200 adjusts a primitive for display.

S505: The computer 200 displays the primitive.

In some embodiments, a spatial mapping relationship between the first screen background and the second screen background is obtained based on the set of registration points. It may be understood that the spatial mapping relationship corresponds to the relative position between the mobile phone 100 and the computer 200. It may be understood that, a position that is on an actual screen of the computer 200 and that corresponds to any pixel that is on the screen of the computer 200 and that is captured by using the mobile phone 100 may be obtained based on the obtained spatial mapping relationship. In this case, based on the spatial mapping relationship, a corresponding central position of the central point of the primitive in the second screen background, and a display ratio and a display angle of the primitive when the primitive is displayed on the screen of the computer 200 may be obtained. Then, the primitive is displayed at the corresponding central position based on the display ratio and the display angle. A specific process of obtaining, based on the spatial mapping relationship, the display ratio and the display angle that are required by the primitive is described in FIG. 7 below. Details are not described herein again.

For ease of description, a point corresponding to the central point of the primitive in the first screen background is referred to as a "first central point", and a point corresponding to the central point of the primitive in the second screen background is referred to as a "second central point".

Specifically, after obtaining the first central point of the first screen background that is captured by using the mobile phone 100, the computer 200 finds, based on the spatial mapping relationship, a second central position that corresponds to the first central position of the first central point on the first screen background and that is on the actual screen (that is, the second screen background) of the computer 200. After the received primitive is displayed based on the display angle and the display ratio that are required for displaying the primitive on the screen of the computer 200 and that are obtained based on the spatial mapping relationship, the primitive is placed at the second central position in an alpha blending overlay manner, and edge filtering optimization is performed, to obtain final primitive display effect.

For example, it is assumed that a first central position of a first central point of an "apple" primitive on the mobile phone 100 is (a1, b1) in an XOY coordinate system. In this case, a second central position that is of the first central point on the screen of the computer 200 in an X'OY' coordinate system and that is obtained based on the spatial mapping relationship is (a1', b1'), a display angle of the primitive is θ1, and a display ratio is k1. The "apple" primitive C1 received from the mobile phone 100 is displayed at the display angle of θ1 and at the display ratio of k1 after being zoomed in, and is placed at the second central position (a1', b1') by using an alpha blending overlay technology.

It may be understood that, for example, as shown in FIG. 6F, after the alpha blending overlay technology is used, the "apple" primitive C1 in (1) of FIG. 6F has some burrs and distortions, and is optimized by using the edge filtering technology to obtain a smooth "apple" primitive C1 as shown in (2) of FIG. 6F.

It may be understood that an execution sequence of step S501 to step S505 is merely an example. In some other embodiments, another execution sequence may be used, or some steps may be split or combined. This is not limited herein.

It may be understood that, in this application, a first electronic device (for example, a mobile phone 100) obtains an image to generate a primitive. Through convenient inter-screen interaction, the primitive can be accurately placed on a screen of a second electronic device (for example, a computer 200) based on a specific central position, a display ratio, and a display angle, resulting in a simple interaction process. The first electronic device only needs to transmit data of the primitive and related data of a first screen background (for example, a first feature point of the first screen background) to the second electronic device. This simplifies an interaction process between devices, and optimizes an amount of data transmitted between the devices.

FIG. 7A is a diagram of a specific process in which a display ratio and a display angle that need to be adjusted when a primitive is placed on a screen of a computer 200 are determined based on a spatial mapping relationship between a first screen background and a second screen background according to some embodiments of this application. Specifically, as shown in FIG. 7A, the specific process may include the following steps.

S701: Obtain the spatial mapping relationship between the first screen background and the second screen background based on a set of registration points.

In some embodiments, among the set of registration points of the first screen background and the second screen background, a pair of registration points with high similarity is selected to construct a spatial transformation matrix (for example, a homography matrix) for perspective transformation, and the spatial transformation matrix is used as the spatial mapping relationship. It may be understood that the two planes of the first screen background and the second screen background are registered in space, to find the spatial mapping relationship. The spatial mapping relationship is related to a spatial attribute such as a relative distance and a relative angle between the mobile phone 100 and the computer 200 in space.

S702: Select a first central point St1 and a first offset point St2 from the first background screen, and obtain, through calculation, based on the spatial mapping relationship between the first screen background and the second screen background, a second central point Dt1 that is of the second background screen and that corresponds to the first central point St1 and a second offset point Dt2 that is of the second background screen and that corresponds to the first offset point St2.

It may be understood that the first offset point is any pixel that is on the first background screen and that corresponds to the captured screen of the computer 200. For example, the first offset point may be any pixel on the captured screen of the computer 200 that is on the first background screen and that is overlaid by an apple.

In some embodiments, the second central point Dt1 that is of the second background screen and that corresponds to the first central point St1 and the second offset point Dt2 that is of the second background screen and that corresponds to the first offset point St2 are obtained based on the spatial transformation matrix (for example, the homography matrix).

For example, FIG. 7B shows the second central point Dt1 that is of the second background screen and that corresponds to the first central point St1 and the second offset point Dt2 that is of the second background screen and that corresponds to the first offset point St2.

S703: Calculate, based on the first central point St1, the first offset point St2, the second central point Dt1, and the second offset point Dt2, the display ratio and the display angle that correspond to the primitive.

In some embodiments, for the display ratio required by the primitive, coordinates (st1_x, st1_y) of the first central point St1 and coordinates (st2_x, st2_y) of the first offset point St2 are obtained, and a Euclidean distance d1 between the first central point St1 and the first offset point St2 is calculated based on the coordinates; and coordinates (dt1_x, dt1_y) of the second central point Dt1 and coordinates (dt2_x, dt2_y) of the second offset point Dt2 are obtained, and a Euclidean distance d2 between the second central point Dt1 and the second offset point Dt2 is calculated. It may be understood that a ratio of d2 to d1 is a ratio of a size of a primitive displayed on the screen of the computer 200 to a size of a primitive received by the computer 200. The ratio of d2 to d1 is used as the display ratio for primitive sharing.

In some embodiments, for the display angle required by the primitive, coordinates (st1_x, st1_y) of the first central point St1 and coordinates (st2_x, st2_y) of the first offset point St2 are obtained, an included angle β1 between OY and a straight line on which the first central point St1 and the first offset point St2 are located is calculated based on the coordinates; and coordinates (dt1_x, dt1_y) of the second central point Dt1 and coordinates (dt2_x, dt2_y) of the second offset point Dt2 are obtained, and an included angle β2 between OY' and a straight line on which the second central point Dt1 and the second offset point Dt2 are located is calculated based on the coordinates. A difference between the two included angles |β1-β2| is used as the display angle for primitive sharing.

For example, in FIG. 7B, after the computer 200 receives the data of the primitive, the OY axis in the coordinate system XOY of the mobile phone 100 is parallel to the OY' axis in the coordinate system X'OY' of the computer 200. In this case, for an interface of the mobile phone 100, an angle 1 is obtained by calculating the included angle between OY and the straight line on which the first central point St1 and the first offset point St2 are located; and for an interface of the computer 200, an angle 2 is obtained by calculating the included angle between OY' and the straight line on which the second central point Dt1 and the second offset point Dt2 are located. The display angle is obtained by subtracting the angle 2 from the angle 1.

It may be understood that an execution sequence of step S701 to step 703 is merely an example. In some other embodiments, another execution sequence may be used, or some steps may be split or combined. This is not limited herein.

FIG. 8 is a diagram of structural modules of a mobile phone 100 and a computer 200 that enable the computer 200 to display an adjusted primitive on a screen according to some embodiments of this application. Specifically, as shown in FIG. 8, the mobile phone 100 includes an application 801A and a primitive calculation unit 802A. The computer 200 includes an application 801B and a primitive calculation unit 802B. The primitive calculation unit 802A and the primitive calculation unit 802B cooperate to implement the display method shown in FIG. 5.

Specifically, the application 801A in the mobile phone 100 has an application that has a function of displaying a primitive and a camera function, for example, material sharing software shown in FIG. 3A. The application 801B in the computer 200 is an application that can display a received primitive, for example, image processing software shown in FIG. 3A. It may be understood that, the application 801A in the mobile phone 100 and the application 801B in the computer 200 can respectively invoke the primitive calculation units in the devices, so that the computer 200 obtains, by using the mobile phone 100, a primitive that needs to be displayed, and displays the primitive at a corresponding position.

The primitive calculation unit 802A includes a connection subunit 8021A, a primitive generation subunit 8022A, and an inter-screen interaction subunit 8023A. The primitive calculation unit 802B includes a connection subunit 8021B, a matching subunit 8022B, a primitive display subunit 8023B, and a data storage subunit 8024B.

The connection subunit 8021A and the connection subunit 8021B perform service initialization to connect to a device. The primitive generation subunit 8022A is configured to generate data of a primitive. For example, the content specifically described in S501 in FIG. 5 may be performed. This is not described herein again. In this case, the primitive generation subunit 8022A sends the data of the primitive to the computer 200, and the data storage subunit 8024B in the computer 200 stores the received data of the primitive.

The inter-screen interaction subunit 8023A is configured to: display a primitive on a screen, and perform image shooting on the computer 200 by using a camera function to obtain the first screen background, where the primitive on the screen of the mobile phone 100 is superimposed and displayed on the first screen background; and send the obtained related data of the first screen background to the computer 200. The data storage subunit 8024B in the computer 200 stores the received related data of the first screen background. For example, the content specifically described in S502 in FIG. 5 may be performed. This is not described herein again.

The matching subunit 8022B is configured to: match the stored related data of the first screen background with related data of the second screen background, and determine whether the matching is successful. For example, the content specifically described in S503 and S504 in FIG. 5 may be performed. This is not described herein again.

The primitive display subunit 8023B is configured to: obtain a spatial mapping relationship between the first screen background and the second screen background; obtain, based on the spatial mapping relationship, a display angle, a display ratio, and a corresponding second central position that correspond to the primitive; and display the primitive after adjusting the primitive. For example, the content specifically described in S505 in FIG. 5 may be performed. This is not described herein again.

It may be understood that, the structure modules of the mobile phone 100 and the computer 200 shown in FIG. 8 are merely examples. In some other embodiments, the structure modules may be other module structures. This is not limited in embodiments of this application.

It may be understood that the mobile phone 100 and the computer 200 may alternatively provide an image material for the computer 200, and the required primitive is displayed on the screen of the mobile phone 100. In this case, the mobile phone 100 also includes the matching subunit 8022B and the primitive display subunit 8023B. Correspondingly, the computer 200 also includes the primitive generation subunit 8022A and the inter-screen interaction subunit 8023A. This is not required herein.

It may be understood that, in addition to the image processing software and the material sharing software mentioned above, the application that is in the computer 200 and that supports primitive display and the application that is in the mobile phone 100 and that supports primitive obtaining and primitive transmission mentioned in this application may be any other applications that support the function, for example, an office application, a social software application, and the like. Specifically, a note, a memo, and instant messaging software. All of these are within the protection scope of this application. In addition, it may be understood that the primitive calculation units in the mobile phone 100 and the computer 200 in FIG. 8 may be functional units included in the applications, or may be functional units provided by systems in the mobile phone 100 and the computer 200. When the applications of the mobile phone 100 and the computer 200 need to use the primitive calculation functional units, the applications of the mobile phone 100 and the computer 200 may invoke corresponding functional modules from the systems to cooperate with each other to implement primitive display.

It may be understood that, when the user performs primitive sharing on a same display picture of the image processing software on the computer 200 for a plurality of times, the second screen background on the computer 200 does not change.

It may be understood that there is no strict primary/secondary role relationship between the first electronic device (for example, the mobile phone 100) and the second electronic device (for example, the computer 200), so that a primitive sharing service can be flexibly performed between the devices (that is, the primitive sent by the first electronic device is displayed on a screen of the second electronic device).

Further, FIG. 9 is a diagram of a software structure of a mobile phone 100 according to some embodiments of this application. As shown in FIG. 9, the software structure of the mobile phone 100 is a multi-layer structure, and is sequentially an application layer 91, an application framework layer 92, a system library 93, and a kernel layer 94 from top to bottom.

The application layer 91 may include a series of application packages. As shown in FIG. 9, the application layer 91 includes applications such as Bluetooth 910, music 911, a gallery 912, a camera 913, and material sharing 914. In some embodiments of this application, the material sharing 914 may provide a primitive for the image material desired to be displayed on the computer 200 by the user.

The application framework layer 92 provides an application programming interface (application programming interface, API) and a programming framework for an application at the application layer 91. The application framework layer includes some predefined functions. The application framework layer 92 includes a notification manager 920, a view system 921, a content provider 922, primitive calculation 923, a resource manager 924, and the like. In some embodiments of this application, the primitive calculation 923 is configured to provide, for the material sharing 914, an application programming interface and a programming framework for invoking a primitive-related operation in the system library.

The system library 93 is a core of a software system of the mobile phone 100, and may provide a service for an application at the application layer 91 through the application framework layer 92. The system service layer 93 includes a media library 930, a graphics processing unit 931, a surface management library 932, a signal processing library 933, a primitive calculation library 934, and the like. In some embodiments of this application, the primitive calculation library 934 can receive an instruction of the primitive calculation 923, and perform a primitive processing related operation. For example, the primitive calculation library 934 includes the primitive calculation unit 802A in FIG. 8, to perform operations such as primitive generation and inter-screen interaction.

The kernel layer 94 includes a display driver 940, a camera driver 941, a network adapter driver 942, an audio driver 943, a sensor driver 944, and the like. In some embodiments of this application, the camera driver 941 can drive a camera to perform image shooting based on a camera function.

It may be understood that the software structure of the mobile phone 100 shown in FIG. 9 is merely an example. In some other embodiments, the mobile phone 100 may alternatively use a software structure in another form, for example, Android^{™}, iOS^{™}, HarmonyOS^{™}, Tizen^{™,} or the like. This is not limited in embodiments of this application.

FIG. 10 is a diagram of a hardware structure of a mobile phone 100 according to an embodiment of this application.

In FIG. 10, similar components have same reference numerals. As shown in FIG. 10, the mobile phone 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile phone 100. In some other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units, for example, may include a processing module or a processing circuit of a central processing unit (central processing unit, CPU), a graphics processing unit (graphics processing unit, GPU), a digital signal processor (digital signal processor, DSP), a microprocessor (micro-programmed control unit, MCU), an artificial intelligence (artificial intelligence, AI) processor, or a programmable logic device (field programmable gate array, FPGA), or the like. Different processing units may be independent devices, or may be integrated into one or more processors. In some embodiments, the processor 100 may perform the operations in the display method related to the mobile phone 100 in FIG. 5.

The memory may be configured to store data, a software program, and a module, and may be a volatile memory (volatile memory), for example, a random-access memory (random-access memory, RAM); or a non-volatile memory (non-volatile memory), for example, a read-only memory (read-only memory, ROM), a flash memory (flash memory), a hard disk drive (hard disk drive, HDD), or a solid-state drive (solid-state drive, SSD); or a combination of the foregoing types of memories; or may be a removable storage medium, for example, a secure digital (secure digital, SD) memory card.

The charging management module 140 may include a power supply, a power management component, and the like. The power supply may be a battery. The power management component is configured to manage charging of the power supply and power supply of the power supply to another module. The charging management module is configured to receive charging input from a charger. The power management module is configured to connect to the power supply, the charging management module and the processor 110.

The mobile communication module 150 may include but is not limited to an antenna, a power amplifier, a filter, a low noise amplifier (low noise amplifier, LNA), and the like. The mobile communication module 150 may provide a wireless communication solution that is applied to the mobile phone 100 and that includes 2G/3G/4G/5G or the like. The wireless communication module 160 may include an antenna, and receive and send an electromagnetic wave through the antenna.

The mobile phone 100 may communicate with a network and another device by using a wireless communication technology.

In some embodiments, the mobile communication module 150 and the wireless communication module 160 of the mobile phone 100 may alternatively be located in a same module.

The camera 193 is configured to capture a static image or a video. An optical image of a scene is generated through a lens, and is projected onto a photosensitive element. The photosensitive element converts an optical signal into an electrical signal, and then transfers the electrical signal to an image signal processor (image signal processor, ISP). The image signal processor converts the electrical signal into a digital image signal. The mobile phone 100 may implement an image shooting function by using the ISP, the camera 193, a video codec, the graphics processing unit (graphics processing unit, GPU), the display, an application processor, and the like.

The display includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The audio module 170 may convert digital audio information into an analog audio signal for output, or convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The interface module includes an interface for external memory, a universal serial bus (universal serial bus, USB) interface, a subscriber identity module (subscriber identity module, SIM) card interface, and the like. The interface for external memory may be configured to connect to an external memory card, for example, a micro SD card, to expand a storage capability of the mobile phone 100. The external memory card communicates with the processor 110 through the interface for external memory, to implement a data storage function. The universal serial bus interface is configured for communication between the mobile phone 100 and another mobile phone. The subscriber identity module card interface is configured to communicate with a SIM card installed in the mobile phone 100, for example, is configured to read a phone number stored in the SIM card, or write a phone number into the SIM card.

In some embodiments, the mobile phone 100 further includes a button, a motor, an indicator, and the like. The button may include a volume button, a power-on/power-off button, and the like. The motor is configured to enable the mobile phone 100 to generate vibration effect. The indicator may include a laser indicator, a radio frequency indicator, an LED indicator, and the like.

It may be understood that the structure shown in this embodiment of the present invention does not constitute a specific limitation on the mobile phone 100.

It should be noted that, the processor in embodiments of this application may be an integrated circuit chip, and has a signal processing capability. During implementation, the steps in the foregoing method embodiments may be completed by using a hardware integrated logic circuit in the processor, or by using instructions or program code in a form of software. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random-access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

According to the method provided in embodiments of this application, this application further provides a computer program product. The computer program product includes computer program code. When the computer program code is run on a computer, the computer is enabled to implement the steps performed by the electronic device in any one of the foregoing embodiments. According to the method provided in embodiments of this application, this application further provides a computer-readable medium. The computer-readable medium stores program code. When the program code is run on a computer, the computer is enabled to implement the steps performed by the electronic device in any one of the foregoing embodiments.

Embodiments of mechanisms disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used to input instructions to perform functions described in this application and generate output information. The output information may be used in one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level programming language or an object-oriented programming language to communicate with the processing system. The program code may alternatively be implemented by using an assembly language or a machine language when required. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried by or stored on one or more transitory or non-transitory machine-readable (for example, computer-readable) storage media and that may be read and executed by one or more processors. For example, the instructions may be distributed through a network or another computer-readable medium. Therefore, a machine-readable medium may include any mechanism for storing or transmitting information in a machine (for example, a computer)-readable form, including but not limited to a floppy disk, a compact disc, an optical disc, a magnetic optical disc, a read-only memory (ROM), a random-access memory (RAM), an erasable programmable read-only memory (EPROM), an electrically erasable programmable read-only memory (EEPROM), a magnetic card, an optical card, a flash memory, or a tangible machine-readable memory for transmitting information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or sequence. However, it should be understood that such a particular arrangement and/or sequence may not be required. In some embodiments, these features may be arranged in a manner and/or a sequence different from that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not described in the foregoing device embodiments of this application. This does not mean that there are no other units/modules in the foregoing device embodiments.

It should be noted that, in the examples and specification of this patent, relational terms such as first and second are merely used to distinguish one entity or operation from another, and do not necessarily require or imply any such actual relationship or sequence between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A display method, comprising:
detecting, by a first electronic device, a first sharing operation performed by a user for sharing first information with a second electronic device, and performing image shooting, by the first electronic device, on a display screen of the second electronic device based on first position information;
displaying, by the second electronic device, the first information based on a first display parameter;
detecting, by the first electronic device, a second sharing operation performed by the user for sharing second information with the second electronic device, and performing image shooting, by the first electronic device, on the display screen of the second electronic device based on second position information; and
displaying, by the second electronic device, the second information based on a second display parameter, wherein
the first position information and the second position information comprise at least one of a relative distance and a relative angle between the first electronic device and the second electronic device, and the first display parameter and the second display parameter comprise at least one of a display ratio and a display angle.

2. The method according to claim 1, wherein the first information and the second information each are an image or a primitive in an image.

3. The method according to claim 2, wherein the display ratio is a ratio of a size of the first information displayed on the second electronic device to a size of the first information displayed on the first electronic device.

4. The method according to claim 3, wherein the first position information comprises a first relative distance, and the first display parameter comprises a first display ratio; and
the second position information comprises a second relative distance, and the second display parameter comprises a second display ratio, wherein
the first relative distance is less than the second relative distance, and the first display ratio is less than the second display ratio.

5. The method according to claim 1, further comprising:
the first position information comprises a first relative angle, and the first display parameter comprises a first display angle; and
the second position information comprises a second relative angle, and the second display parameter comprises a second display angle, wherein
the first relative angle is less than the second relative angle, and the first display angle is less than the second display angle.

6. The method according to claim 1, wherein the first information comprises a first primitive in a first image, and the method further comprises:
after detecting the first sharing operation, extracting, by the first electronic device, the first image or a plurality of primitives that are in a first region and that are selected by the user from the first image; and
displaying, by the first electronic device, the plurality of primitives, and sending, to the second electronic device, a first primitive selected by the user from the plurality of primitives.

7. The method according to claim 1, wherein the first information comprises a first primitive in a first image, and the method further comprises:
after detecting the first sharing operation, extracting, by the first electronic device, a primitive in the first image; and
displaying, by the first electronic device, the extracted primitive as the first primitive, and sending the first primitive to the second electronic device.

8. The method according to claim 1, wherein the first information is displayed in a first application interface of the second electronic device.

9. The method according to claim 1, wherein the method further comprises:
sending, by the first electronic device to the second electronic device, first screen background image information of a first screen background image that is obtained through image shooting on the display screen of the second electronic device based on the first position information; and
determining, by the second electronic device, the first display parameter based on the first screen background image information.

10. The method according to claim 9, wherein the first screen background image information comprises a plurality of first image feature points of the first screen background image; and
determining, by the second electronic device, the first display parameter based on the first screen background image information comprises:
determining, by the second electronic device, the first display parameter based on the plurality of first image feature points of the first screen background image and a plurality of second image feature points that are in a first screen image on a current display interface of the second electronic device and that correspond to the plurality of first image feature points.

11. The method according to claim 10, wherein the first display parameter comprises the first display ratio; and
determining, by the second electronic device, the first display parameter based on the plurality of first image feature points of the first screen background image and the plurality of second image feature points that are in the first screen image on the current display interface of the second electronic device and that correspond to the plurality of first image feature points comprises:
obtaining a spatial transformation matrix based on the plurality of first image feature points and the plurality of second image feature points;
determining, from the first screen image on the current display interface of the second electronic device based on the spatial transformation matrix, a second central point corresponding to a first central point of the first screen background image and a second offset point corresponding to a first offset point of the first screen background image;
obtaining, through calculation, a first distance based on coordinates of the first central point and coordinates of the first offset point, and obtaining, through calculation, a second distance based on coordinates of the second central point and coordinates of the second offset point; and
obtaining the first display ratio based on a ratio between the first distance and the second distance.

12. The method according to claim 10, wherein the first display parameter comprises the first display angle; and
determining, by the second electronic device, the first display parameter based on the plurality of first image feature points of the first screen background image and the plurality of second image feature points that are in the first screen image on the current display interface of the second electronic device and that correspond to the plurality of first image feature points comprises:
obtaining a spatial transformation matrix based on the plurality of first image feature points and the plurality of second image feature points;
determining, from the first screen image on the current display interface of the second electronic device based on the spatial transformation matrix, a second central point corresponding to a first central point of the first screen background image and a second offset point corresponding to a first offset point of the first screen background image;
calculating a first angle between a straight line in which the first central point and the first offset point are located and a first coordinate axis in a coordinate system of the second electronic device, and calculating a second angle between a straight line in which the second central point and the second offset point are located and the first coordinate axis in the coordinate system of the second electronic device; and
obtaining the first display angle based on a difference between the first angle and the second angle.

13. An electronic device, comprising one or more processors and one or more memories, wherein the one or more memories store one or more programs, and when the one or more programs are executed by the one or more processors, the electronic device is enabled to perform the display method according to any one of claims 1 to 12.

14. A computer-readable storage medium, wherein the storage medium stores instructions, and when the instructions are executed on a computer, the computer is enabled to perform the display method according to any one of claims 1 to 12.

15. A computer program product comprising instructions, wherein when the computer program product is run on a computer, the computer is enabled to perform the display method according to any one of claims 1 to 12.
